# EUROPEAN PATENT SPECIFICATION

(11) **EP 2 575 301 B1**
(45) Date of publication and mention of the grant of the patent: **30.12.2020**
(21) Application number: 11007901.9
(22) Date of filing: 29.09.2011
(51) Int. Cl.: H04L 12/70

(54) **Virtual composite telematic modem**
Virtuelles Verbundtelematikmodem
Modem télématique composite virtuel

(43) Date of publication of application: 03.04.2013
(73) Proprietor: Harman Becker Automotive Systems GmbH, 76307 Karlsbad (DE)
(72) Inventor: Guenkova-Luy, Teodora Dr., 89081 Ulm (DE); Clauss, Martin, 88444 Ummendorf (DE); Abt, Oliver, 89134 Blaustein (DE)
(74) Representative: Grünecker Patent- und Rechtsanwälte PartG mbB

(56) References cited:
- EP-A2- 0 896 493
- US-A1- 2005 245 241
- US-B1- 6 973 024

## Description

### Field of Invention

The present invention relates to telematic systems, in particular, automotive telematic systems, wherein a plurality of telematic devices are provided for transferring media (data, voice, etc.) to and from a communication network.

### Background of the invention

Telecommunication, mobile services become nowadays ubiquitously available in various environments. The general application of such services is indicated as telematics, which means the integrated application of telecommunications and informatics, whereby technologies for sending, receiving and storing information via telecommunication devices are put into operation for realization, for example, of home and business applications. For example, in the automotive environment vehicular infotainment and telematics are offered via multiple devices both installed in the vehicle and mobile devices carried by a user and possibly connected to a vehicle communication system, for instance terminal devices like Personal Digital Assistants and mobile phones.

US 6 973 024 B1 discloses a method for modem switchover is taught wherein a base modem and a standby modem are connected to a packet network for providing voice over IP communication offered by a public switched telephone network.

US 2005/0245241 A1 discloses a mobile advertising and directory assistance system wherein a directory assistance provider provides a user of a mobile station access to a client-side content delivery application residing in the mobile station and facilitating retrieval of directory assistance data comprising rich multimedia content. Retrieved content can be displayed on a screen of the mobile station or a linked display device that is accessible by the client-side content delivery application.

Considering the fact that the communication infrastructure develops more slowly compared to the user terminal devices, in general the mobile user-applications are constrained to operate under conditions of a less powerful network generation, e.g. a 4G (4^{th} generation) telematic device like LTE (Long-Term Evolution) could be forced to connect to 3G UMTS (3^{rd} generation - Universal Mobile Telecommunications System) or even 2G GSM (2^{nd} generation - Global System for Mobile Communications) Base-Stations due to unavailability of better infrastructure technology at the area of the device-attachment. This results in lesser performance or even disability to operate for the mobile user-applications.

In the context of the use of telematic services it should be made possible to transmit and receive both packet-based data, for example, Internet Protocol (IP) data, and voice. However, current mobile networks cannot always support packet data and voice simultaneously over the same end-customer device. Moreover, some networks or end-customer devices are limited to only IP-centric solutions for packet-data only. Especially in mobile networks the effective communication bandwidth and network accessibility often pose problems in form of data delay or even interruptions of the data streams and connections on a single device.

Thus, it is an object of the present invention to provide means for improving connectivity and bandwidth capacity of telematic applications when a user makes use of a variety of telematic devices. It is also desirable to provide means for more efficient use of telematic services including both packet-based data transfer and voice transmission and reception.

### Description of the Invention

The above-mentioned objects are addressed by the method according to claim 1. The claimed computer-implemented method for managing data traffic comprises the steps of
connecting at least two telematic devices to a computer system;
managing by the computer system connection of the at least two telematic devices to a communication network for receiving packet-based data and voice data from the communication network by the at least two telematic devices; and wherein
the computer system controls one of the at least two telematic devices to receive the packet-based data from the communication network to run a telematic application on the one of the at least two telematic devices and another one of the at least two telematic devices to receive the voice data from the communication network to run another telematic application on the other one of the at least two telematic devices.

Data transfer between the at least two telematic devices and the communication network can be established such that the telematic devices receive data from the communication network and transfer data to the communication network. Connection of the at least two telematic devices to a communication network which can be heterogeneous due to the technology of attachment of the devices is managed by the computer.

According to the inventive method the connectivity capabilities of the at least two telematic devices are coupled and presented as one virtual device to the application(s). From the viewpoint of telematic applications running on the telematic devices one single (combined) connectivity channel to the communication network is provided. The bundling functionality of the combined connectivity capabilities of the at least two telematic devices can, in principle, be realized in any computer provided for a particular execution environment. The computer may relay the data received from the communication network over the telematic devices to the respective end-applications that are the data users and vice versa.

By the inventive computer-implemented method a virtual composite telematic modem for controlling a variety of telematic devices connected with a communication network is generated. The virtual composite telematic modem hides the underlying particular technologies of the devices from the telematic applications running on the computer system that is the holder of the virtual telematic device method. For example, the virtual composite telematic modem presents to the telematic applications an IP connection for data and GSM-Voice for voice, respectively.

The telematic applications are thus in a position to apply an interface that abstracts from the individual telematic devices and requests data or voice connections with the communication network. The virtual composite telematic modem may apply protocols for data transfer on different levels of abstraction to present to the telematic applications a single connectivity channel for whatever purposes.

The communication network may comprise any wide-area network like the Universal Mobile Telecommunications System (UMTS) network and/or a Global System for Mobile (GSM) Communications network, etc.. In particular, the telematic devices may be connected to the Internet under the control of the computer wherein the computer-implemented method of the virtual telematic device is implemented in.

The computer-implemented method may be implemented in a computer installed in a vehicle, for example, an automobile. In this case, the computer is part of an in-vehicle communication system. The car computer enables the possibility to connect multiple telematic user devices which can be applied as a single modem from the point of view of the applications in the car thereby increasing the effective bandwidth for the applications running their data over the telematic devices and guaranteeing voice and packet-based (non-voice) data parallelism for applications associated with data and/or voice contents. In particular, the bundling of the connectivity capabilities of the telematic devices may serve the requirements of multiple users utilizing the same car computer system.

Another example of home and/or business application of the computer implemented method is considered any case of sharing of personal communication devices in form of a pool controlled via the virtual composite device, whereby the so controlled pool of devices provides better perceivable performance for all applications and their users. In such case the virtual modem is implemented in a computer which performs for example as a router for other home or business stationary or mobile computers.

By the inventive method the overall connectivity performance of the telematic applications is significantly improved by increasing the individual media-transfer bandwidths of each of the telematic applications for data and voice media by bundling the connectivity capabilities of the multiple telematic devices that transfer the media on behalf of the applications. Compared with single device UMTS (or other network technology) the bundled telematic devices obtain higher guarantee for parallel data and voice media without interruption of data flows.

The application of multiple devices increases the overall data throughput of the system by using application and device prioritization at transport protocol level based on different underlying connectivity technologies. The application of the composite virtual modem is applicable in high-mobility, wide-area networks due to their capability to automatically reconfigure based on the environmental conditions. In addition, the provided resource-redundancy by coupling of multiple telematic devices enables the optimal decision within the composite modem when to use which one of the involved telematic device for what media, thereby optimizing the overall network connectivity and the perceivable performance of the end-user telematic applications.

According to an embodiment the computer not only controls which one of the multiple telematic devices connects to and uses the communication network but also reacts on changes of the connection from the communication network of at least one of the at least two telematic devices, for example in cases of network signal changes, handovers or re-attachments to the infrastructure. For example, the computer is part of an automotive communication system installed in an automobile. During the travel of the automobile it may happen that a high quality WLAN network becomes available (due to some WLAN hotspot, for instance). In such a case, the computer may switch connection of at least one of the telematic devices from a UMTS network, for example, to the WLAN network. Thus, both signal quality of the individual telematic devices and communication network quality of different available communication networks can be taken into account when controlling the transfer of data between the communication network and the telematic devices.

According to an example of the method for managing data traffic one of the at least two telematic devices transfers packet-based (non-voice) data to the communication network (receives data from the communication network) whereas another one of the at least two telematic devices transfers voice data to the communication network (receives data from the communication network). Both kinds of data can be transferred in parallel. Since two telematic devices (or even more) participate at the process of data transfer it can be achieved that a particular one of the telematic devices that is particularly suitable for the transfer of packet-based data is used for the transfer of that kind of data whereas another one of the telematic devices that is particularly suitable for the transfer of voice data is selected for the transfer of that kind of data from the communication network.

Typical examples for telematic devices that can be controlled by running the above examples of the computer-implemented method on a computer include a mobile phone, a Personal Digital Assistant, a mobile computer, an USB-UMTS stick (Universal Serial Bus component with integrated UMTS modem), etc. (see also detailed discussion below).

According to another example, the inventive method according to one of the above-described examples comprises the steps of
transfer of voice data by a first telematic device to/from the communication network;
transfer of packet-based data by a second telematic device to/from the communication network; and
running an application based on both the packet-based data and the voice data on any computer utilizing the coupling functionality of the virtual telematic modem as abstraction of the actual physical devices.

Moreover, this example may additionally comprise changing connection of the first or the second telematic device from the communication network due to network signal changes of the network radio paths or handovers between physical sub-networks. The method comprises of monitoring for availability of new communication networks during movement of the computer system wherein the computer-implemented method is implemented in. Wherever it is determined that a change of the network configuration on one or more devices may provide higher quality of data transfer, for example, in terms of the available bandwidth, it can be decided to switch connection of one or more of the telematic devices to another available telematic device in the system.

Consider a case wherein the inventive computer-implemented method for managing data traffic is implemented in a computer of an automotive communication system. A mobile phone and a mobile computer are connected to the computer of the automotive system. The mobile phone is configured for UMTS connection whereas the mobile computer is configured for WLAN connection. Both devices may be connected to the computer of the automotive system via suitable short-range mobile technology (e.g. Bluetooth or WLAN in ad-hoc point-to-point mode, or fix connection like USB). A user the automotive system intends to call a person by means of the attached to it mobile phone. The automotive computer checks availability of communication networks. It may be the case that a UMTS network is available whereas WLAN is not.

The automotive computer controls connection of the mobile phone to the UMTS network and the user makes the call. Any Internet data has to share in such case bandwidth with the voice call or is simply impossible as the underlying network does not support this (for example, in 2G GSM base-stations). During the travel of the vehicle wherein the automotive system is installed a WLAN hotspot is arrived and the vehicle parks in the range of the WLAN network. In such a situation the automotive computer may decide to switch the data channel to the mobile computer to use WLAN network in order to receive Internet data desired by the user of the automotive computer as WLAN has higher throughput capacity. The combined connectivity capabilities of the mobile phone and the mobile computer can, thus, be used to eventually supply both voice data and Internet data to the automotive computer at higher quality for both media.

The above-mentioned problem is also addressed by the herein provided communication system, comprising
a computer system (comprising a computer) configured for
connecting to at least two telematic devices;
managing connection of the at least two telematic devices to a communication network for transmitting packet-based data and voice data to the communication network by the at least two telematic devices and/or receiving packet-based data and voice data from the communication network by the at least two telematic devices;
implementing a virtual composite modem that controls the at least two telematic devices; and
allowing one of the at least two telematic devices to run a telematic application based on the data exchanged with the communication network and another one of the at least two telematic devices to run another telematic application based on the data exchanged with the communication network;
and wherein a computer executing the virtual composite modem is configured to control one of the telematic devices to exchange packet-based data with the communication network and another one of the telematic devices to exchange voice data with the communication network.

The computer system may comprise a computer configured for
connecting to at least two telematic devices (for example, a mobile phone and a mobile computer or a mobile phone and a USB-UMTS stick);
managing connection of the at least two telematic devices to a communication network for exchanging data with the network by the at least two telematic devices;
controlling the at least two telematic devices such that both of the at least two telematic devices exchange the data for a telematic application with the communication network at the same time or one of the at least two telematic devices exchanges the data with the communication network at a first time period whereas the other one of the at least two telematic devices exchanges the data with the network at a second time period different from the first time period; and
controlling the at least two telematic devices such that both of the at least two telematic devices exchange the data for a telematic application with the communication network at the same time or one of the at least two telematic devices exchanges the data with the communication network at a first time period whereas the other one of the at least two telematic devices exchanges the data with the network at a second time period different from the first time period; and
allowing that any telematic application running on abstraction of the physical devices provided by the virtual composite modem can exchange data with the communication network.

By exchanging data it is meant transferring data to the communication network and/or receiving data from the communication network.

According to an example, in the communication system a computer (of the computer system) executing the virtual composite modem is configured to change the connection of the at least one of the two telematic devices based on a quality of signal and bandwidth of the specific network technology of attachment from the communication network or change the connection between any of the telematic devices and the communication network based on monitoring of the connection quality.

The computer executing the virtual composite modem may, furthermore, be configured to control one of the telematic devices to exchange packet-based data with the communication network (transfer packet-based data to and/or receive packet-based data from the communication network) and another one of the telematic devices to exchange voice data with the communication network (transfer packet-based data to and/or receive voice data from the communication network).

One of the at least two telematic devices can be a mobile phone, or mobile computer, or any mobile user equipment like USB stick.

Moreover, in the above-mentioned communication system the computer system may be configured to invoke
transferring voice data by a first telematic device from the communication network;
transferring packet-based data by a second telematic device from the communication network; and
running an application based on both the packet-based data and the voice data on any computer utilizing the coupling functionality of the virtual telematic modem as abstraction of the actual physical devices.

The computer system may comprise a computer that is a general purpose computer that follows instructions. All kind of computers from micro to mainframe can be used depending on the specific use-case and execution environment. The computer may also be configured to change the connection of the at least two telematic devices based on a quality of network signal or the network technology of the controlled telematic devices. Particularly, the computer may cause transfer of packet-based data using the network of attachment of the one of the telematic devices and transfer of voice data using the network of attachment of the other one of the telematic devices.

Additional features and advantages of the present invention will be described with reference to the drawings. In the description, reference is made to the accompanying figures that are meant to illustrate preferred embodiments of the invention. It is understood that such embodiments do not represent the full scope of the invention.
Figure 1 illustrates the operation of a virtual composite modem in accordance with an example of the present invention.
Figure 2 illustrates a particular embodiment of the present application wherein application and a virtual composite model are implemented as software units on the same computer.
Figure 3 illustrates a particular embodiment of the present application wherein application and a virtual composite model are implemented as software units on different computers.
Figure 4 illustrates a particular embodiment of the present application wherein application and a virtual composite model are implemented as software units on a mobile computer.

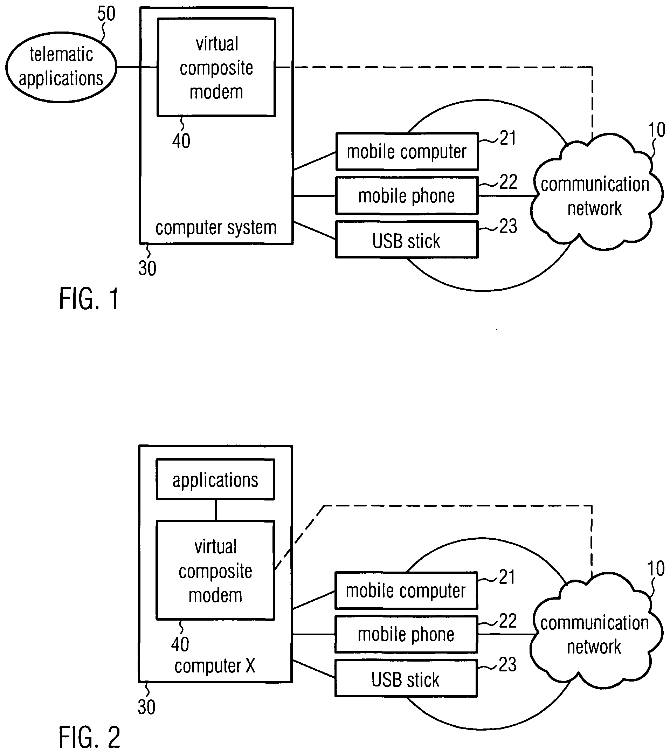

An example for the inventive combined access of multiple telematic devices to a communication network 10 is shown in Figure 1. The communication network 10 may be any wireless high-mobility wide-area network or combination of such wireless networks. The communication network 10 may comprise of but is not limited to technologies like Wireless Local Area Network (WLAN) and/or a General Packet Radios Service (GPRS) network and/or a Global System for Mobile Communications (GSM) network and/or a Universal Mobile Telecommunications System (UMTS) and/or Long-Term-Evolution (LTE) network. All mentioned above technologies belong to IEEE (Institute of Electrical and Electronics Engineers) or 3GPP (3rd Generation Partnership Project) standardization efforts and details thereof can be referred to at the respective standardisation board/-s. The inventive method is not considered to be an enhancement of the mentioned technologies, but just uses these technologies or any similar technologies in a novel way.

The data exchanged via the communication network 10 can be, in general, IP-data that can be static data like text, or dynamic like voice, video, etc. or any digitally coded data like GSM-voice or SMS-text, depending on the used coding and protocols for these information types.

In the shown example, a mobile computer (notebook) 21, a mobile phone 22, and a USB-UMTS stick 23 are provided as mobile telematic devices. The devices 21, 22 and 23 are provided with means for connecting to the communication network 10. For example, the USB stick 23 can be configured to connect to a UMTS network of the communication network 10. The mobile phone 22 can also be configured to connect to the UMTS network of the communication network 10. The mobile computer 21 can be configured to connect to a WLAN network of the communication network 10.

The mobile computer 21, the mobile phone 22 and the USB stick 23, in the present example, are connected to a computer system 30 that comprises a CPU and a memory as well as some interfaces. The computer system 30 may be any in-vehicular (i.e. car, train, plain, etc.) computer system, a stationary or mobile home or business computer system. In case that the computer system 30 is installed in a vehicle it represents a key unit of a vehicle communication system, for instance, an automotive communication system. The mobile computer 21 and the mobile phone 22 may be connected via Bluetooth or WLAN with the computer system 30 while the USB stick is connected via its USB connector to a USB port of the computer system 30.

In the computer system 30 a method for managing media traffic is implemented. This computer-implemented method provides a virtual composite modem 40 for accessing the communication network 10. Actually, the virtual composite modem 40 is not a physical device but rather a data transmission / reception function managed by the computer system 30 and resulting from the combination of the mobile computer 21, the mobile phone 22 and the USB stick 23, i.e. the technologies and properties of accessing the communication network 10 by the devices 21, 22 and 23 are bundled for an improved media transfer.

Telematic applications 50 can be carried out by means of the virtual composite modem 40, i.e., the necessary media transfer between the telematic applications 50 and the communication network 10 is performed by the bundled media transfer capacities of the mobile computer 21, the mobile phone 22 and the USB stick 23.

As already mentioned the computer system 30 can be part of an in-vehicle (automotive) communication system. The computer system can generate a virtual composite telematic modem 40 thereby coupling the mechanisms for vehicle external data connectivity in order to represent them to the telematic applications in the vehicle as a single connectivity channel. In general case the bundling functionality of the virtual composite telematic modem 40 can be implemented in any computer related to the specific execution environment.

The virtual composite telematic modem 40 hides the underlying technologies from the telematic applications and presents to them for example only the IP-connection for packet-based data or the GSM-voice for voice, i.e. the virtual composite modem 40 represents the multiple physical telematic devices as a single virtual device to the telematic applications running on the devices. The applications are thus in position to apply an interface abstracting the actual devices and applying methods for just requesting data or voice connections.

Hence the composite telematic modem 40 may apply protocols on different levels of abstraction to represent to the applications a single connectivity channel for whatever purposes. The telematic devices may experience connectivity interruptions due to the mobility of the vehicle. In the case of an interruption of the data flow between a telematic device and the communication network 10, the composite telematic modem 40 is in a position to recognize automatically such situations and reconfigure itself so that only the physically available devices and connectivity channels are usable to the telematic applications under question.

Particularly, the virtual combined telematic modem 40 provides an improved data and voice parallelism as compared with the art. For example, a UMTS base station will allow the communication of two telematic devices in parallel irrespectively of its current load, whereas parallel data-voice execution on one device might not work due to base station load. Without the inventive parallel data - voice capability (connectivity) of an attached 2G GSM base station a single physical device is forced to sequential execute data and voice.

In the example of a the virtual composite telematic modem 40 illustrated in Figure 1 a USB-UMTS stick 23 and a Bluetooth coupled mobile phone 22 are provided for realization of an external connection whereby voice over the Bluetooth coupled mobile phone and data over the USB-coupled UMTS modem has higher parallel execution guarantee for the same base station as compared to a mobile telephone alone. Attachment of the bundled devices to different base stations (e.g. of different providers or due to the power of the mobile system signal) are also encompassed in this example. Thus the accessibility can be also increased or better load-distribution due to the attachment to different available access-nodes of the single bundled devices can be achieved.

Moreover, the inventive method results in a higher effective bandwidth and thus in higher Service Quality for the end-user applications irrespectively if the application itself is best-effort or Quality of Service (QoS) aware as the virtual composite modem can control the media access of the applications based on the transfer capabilities of the attached devices and the transfer load requirements of the applications. The virtual composite modem is thus also in position to integrate and use existing techniques for QoS management of single media types like priority management or packet filtering. However, the QoS-relevant data-scheduling occurs over all bundled devices and it is not based on single point-to-point communication per media or application.

Quality of Service can be applied as a first optimization step within the system on the level of selection of devices based on the network signal strength with respect to the selection which device shall be taken for certain media services. More critical applications are associated with devices having the better network signal. Furthermore, in case of UMTS-capable base station with parallel data and voice, the combination of a Bluetooth coupled mobile phone 22 and a coupled USB UMTS stick 23 leads effectively to two data channels, which circumstance can be applied also to put voice connection on the Bluetooth phone and the data on the USB UMTS stick thus decoupling the media in order to avoid mutual disturbances compared with the case in that both media are on the same device (i.e. the Bluetooth phone) or during already existing voice. All new data connections can be shifted to the USB stick thereby preserving better bandwidth for the voice connection on the Bluetooth phone.

Provision of the mobile computer 21 enables data transfer via a third data channel that can be used in addition to or alternatively for the USB stick 23, for instance. For example, when voice is transmitted via the communication network 10, a voice capable device (mobile phone 22) can be used for the reception of the voice data, whereas the data-capable devices (USB-UMTS stick 23 and the mobile computer 21) are used for the packet-based data. Furthermore, due to changes of the networks (of attachment) and by considering service priorities (e.g. QoS priorities for the IP-packets of the applications), higher priority application may be scheduled to the higher bandwidth data-channel of the mobile computer 21 with WLAN technology, whereas low priority applications may remain on the USB-UMTS stick 23.

This use-case can be further generalized so that more than two devices are used. In such case, however, it might be considered necessary that the user or the provider of the devices defines an order of application of the devices so that the virtual composite modem 40 is informed by configuration in what order to select the devices with respect to network accessibility probability or costs for transferring of the information.

For the purpose of this solution, where the virtual composite modem 40 operates as an abstraction on IP-level a possible technology for the configuration of the modem 40 is the Mobile-IP Concept, where the multiple care-of addresses of the devices are hidden behind a single home IP-address or the target device where the telematic applications operate. For example, the home address is the address of the target computer executing the virtual composite modem within the computer system 30 abstracting the temporary care-of addresses of the attached mobile telematic devices 21, 22 and 23.

Furthermore, the mobile composite telematic modem 40 may operate as a Gateway on different protocol levels thus being able to map heterogeneous media-transfer to/from the single telematic devices 21, 22 and 23 in a generalized way for the target applications operating on the abstraction of the composite modem 40.

The inventive virtual composite telematic modem 40 can automatically reconfigure itself based on the current connectivity capabilities of the coupled underlying devices thus providing seamless and continuous application of the connectivity channel for the telematic services regardless of changes within the underlying devices. This feature is applicable as long as the connectivity disruptions are not critical from the application point of view, as time critical and session aware applications might not cope with the short interruptions needed for the recognition of the system state and the reconfiguration of the modem. Particular examples of such usage scenarios are:
a) Changes of the network-signal strength of the different devices, whereby more critical applications are shifted to devices having better quality of the network signal. This solution may apply concepts of the Mobile Ad Hoc Network (MANET) protocol family to increase its efficiency, e.g. by exchanging information with the fix or ad-hoc network infrastructure concerning accessibility probability and network load for the purpose of re-calculation of the association of the media with the coupled devices. The MANET architecture and protocols are standardisation efforts of IETF (Internet Engineering Task Force) and details of this technology can be referred to at the respective equally named IETF working group.
b) If a mobile phone 22 applies Advanced Audio Distribution Profile (A2DP) to play music over the Bluetooth internal connectivity channel, the BT-connectivity for IP-data for external connections to the Internet is decreased or simply not available. Considering the execution circumstances of the BT-Phone, the composite modem 40 may temporarily disable this device for telematic usage and transfer data-streams over other available devices (for example, mobile computer 21) and connectivity channels.
c) In the case that a WLAN device reports possible external connectivity to the Internet, the virtual composite telematic modem 40 may reconfigure the IP-channel to this device due to the higher bandwidth of this technology compared with attached in parallel GSM or UMTS mobile devices
d) Known provider/user restrictions to use certain device for certain media and dynamic changes of these configurations may also lead to an automatic dynamic reconfiguration of the modem 40 considering the necessity that the user provides the order of application of its devices and considering also cost issues.

Consequently, the virtual composite telematic modem 40 is in a position to always apply the available devices (for example, the mobile computer 21, the mobile phone 22 and the USB stick 23 of Figure 1) in an optimal way depending on their capabilities and/or limitations.

In Figures 2 to 4 particular ways of realizing of the present invention are illustrated. As shown in Figure 2 both the telematic applications and the virtual composite telematic modem 40 can be implemented as software units in the very same computer X of a computer system 30. This embodiment is particularly appropriate for an in-vehicle solution. As in the example shown in Figure 1 a mobile computer (notebook) 21, a mobile phone 22, and a USB-UMTS stick 23 are provided as mobile telematic devices that are connected to the computer X.

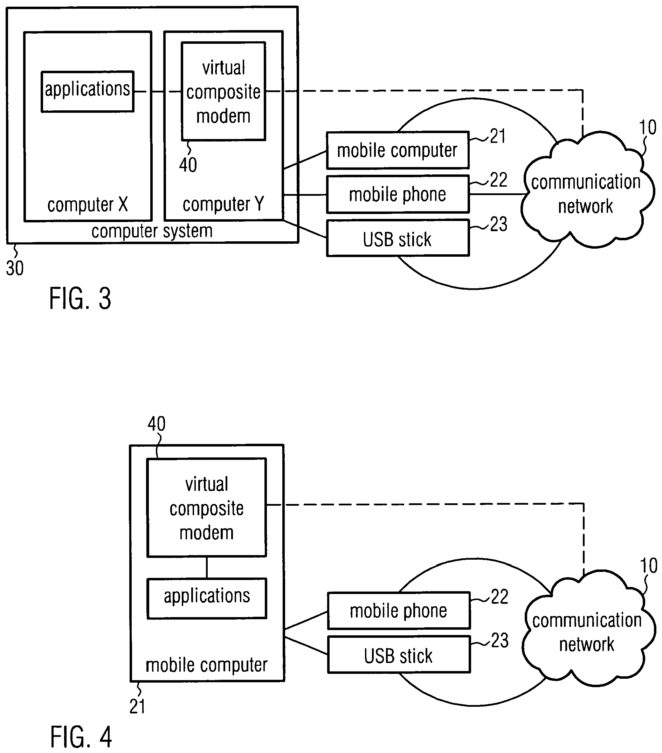

Alternatively, and as it is shown in Figure 3, the telematic application(s) may be run of a first computer X of the computer system 30 and the virtual composite telematic modem 40 can be run on a second computer Y of the computer system 30.

According to a further example, the mobile computer 21 shown in Figure 1 can be used as the execution device for both running the telematic application(s) and the telematic communication with the communication network 10.

All previously discussed embodiments are not intended as limitations but serve as examples illustrating features and advantages of the invention. It is to be understood that some or all of the above described features can also be combined in different ways.

## Claims

1. A computer-implemented method for managing data traffic, comprising the steps of
connecting at least two telematic devices (21, 22, 23) to a computer system (30);
managing by the computer system (30) connection of the at least two telematic devices (21, 22, 23) to a communication network (10) for receiving packet-based data and voice data from the communication network (10) by the at least two telematic devices (21, 22, 23); and wherein
the computer system (30) controls one of the at least two telematic devices (21, 22, 23) to receive the packet-based data from the communication network (10) to run a telematic application on the one of the at least two telematic devices (21, 22, 23) and another one of the at least two telematic devices (21, 22, 23) to receive the voice data from the communication network (10) to run another telematic application on the other one of the at least two telematic devices (21, 22, 23).

2. The method according to claim 1, wherein the computer system (30) changes connection from at least one of the at least two telematic devices (21, 22, 23) to the communication network (10) to another one of the at least two telematic devices (21, 22, 23) to the communication network (30), in particular, by means of a virtual composite modem (40) that is particularly realized by the computer system (30).

3. The method according to claim 2, wherein the change of connection is based on quality of signal and bandwidth of the specific network technology of attachment from the communication network (10) by the at least one of the at least two telematic devices (21, 22, 23).

4. The method according to one of the preceding claims, wherein at least one of the at least two telematic devices (21, 22, 23) transmits data to the communication network (10).

5. The method according to claim 4, wherein the data transmitted to the communication network (10) comprises packet-based data and voice data.

6. The method according to one of the preceding claims, wherein one of the at least two telematic devices (21, 22, 23) is a mobile phone (22), or USB-UMTS device (23), or mobile computer (21), or any mobile end-user equipment supporting attachment to wireless communication network (10).

7. The method according to one of the preceding claims, wherein connection of the at least two telematic devices (21, 22, 23) to the communication network (10) is realized by a virtual composite modem (40) is part of a communication system (30) installed in either of
a) a vehicle, in particular, in an automobile;
b) a home or business environment, in particular, in a hardware modem controller or a mobile personal device, in particular, a laptop or a stationary personal device, in particular, a personal computer.

8. The method according to one of the preceding claims, comprising the steps of
transmitting voice data by a first telematic device from the communication network (10);
transmitting packet-based data by a second telematic device from the communication network (10); and
running an application based on both the packet-based data and the voice data on any of the telematic devices or any device within the computer system (30) which can be the device executing the virtual composite device (40) or a completely different personal device within the computer system (30).

9. The method according to claim 8, further comprising changing connection of the first or second telematic device from the communication network (10) to another telematic device due to coupling of this additional device with the computer system (30) and/or due to occurrence of new network technology of attachment within the range of the computer system (30) where the telematic devices execute.

10. Communication system, comprising
a computer system (30) configured for
connecting to at least two telematic devices (21, 22, 23);
managing connection of the at least two telematic devices (21, 22, 23) to a communication network (10) for transmitting packet-based data and voice data to the communication network (10) by the at least two telematic devices (21, 22, 23) and/or receiving packet-based data and voice data from the communication network (10) by the at least two telematic devices (21, 22, 23);
implementing a virtual composite modem (40) that controls the at least two telematic devices (21, 22, 23); and
allowing one of the at least two telematic devices (21, 22, 23) to run a telematic application (50) based on the data exchanged with the communication network (10) and another one of the at least two telematic devices (21, 22, 23) to run another telematic application (50) based on the data exchanged with the communication network (10);
and wherein a computer executing the virtual composite modem (40) is configured to control one of the telematic devices (21, 22, 23) to exchange packet-based data with the communication network (10) and another one of the telematic devices (21, 22, 23) to exchange voice data with the communication network (10).

11. The communication system according to claim 10, wherein a computer executing the virtual composite modem (40) is configured to change the connection of the at least one of the two telematic devices (21, 22, 23) based on a quality of signal and bandwidth of the specific network technology of attachment from the communication network (10) or change the connection between any of the telematic devices (21, 22, 23) and the communication network based on monitoring of the connection quality.

12. The communication system according to claim 10 or 11, wherein one of the at least two telematic devices (21, 22, 23) is a mobile phone (22), or mobile computer (21), or any mobile user equipment like USB stick (23).

13. The communication system according to one of the claims 10 to 12, wherein the computer executing the virtual composite modem is configured to invoke
serving an application based on both the packet-based data and the voice data which can run on any of the telematic device (21, 22, 23) or any other computer within the computer system (30), or on the computer executing the virtual composite modem itself.

## Patentansprüche

1. Computerimplementiertes Verfahren zum Verwalten von Datenverkehr, die folgenden Schritte umfassend:
Verbinden von mindestens zwei Telematikvorrichtungen (21, 22, 23) mit einem Computersystem (30);
Verwalten der Verbindung der mindestens zwei Telematikvorrichtungen (21, 22, 23) mit einem Kommunikationsnetzwerk (10) durch das Computersystem (30) zum Empfangen von paketbasierten Daten und Sprachdaten von dem Kommunikationsnetzwerk (10) durch die mindestens zwei Telematikvorrichtungen (21, 22, 23); und wobei
das Computersystem (30) eine der mindestens zwei Telematikvorrichtungen (21, 22, 23) steuert, um die paketbasierten Daten von dem Kommunikationsnetzwerk (10) zu empfangen, um eine Telematikanwendung auf der einen der mindestens zwei Telematikvorrichtungen (21, 22, 23) und einer anderen der mindestens zwei Telematikvorrichtungen (21, 22, 23) auszuführen, um die Sprachdaten von dem Kommunikationsnetzwerk (10) zu empfangen, um eine andere Telematikanwendung auf der anderen der mindestens zwei Telematikvorrichtungen (21, 22, 23) auszuführen.

2. Verfahren nach Anspruch 1, wobei das Computersystem (30) die Verbindung von mindestens einer der mindestens zwei Telematikvorrichtungen (21, 22, 23) mit dem Kommunikationsnetzwerk (10) zu einer anderen der mindestens zwei Telematikvorrichtungen (21, 22, 23) mit dem Kommunikationsnetzwerk (30) wechselt, insbesondere mittels eines virtuellen Verbundmodems (40), das insbesondere von dem Computersystem (30) realisiert wird.

3. Verfahren nach Anspruch 2, wobei der Wechsel der Verbindung auf einer Signalqualität und Bandbreite der spezifischen Netzwerktechnologie des Anschlusses von dem Kommunikationsnetzwerk (10) durch die mindestens eine der mindestens zwei Telematikvorrichtungen (21, 22, 23) basiert.

4. Verfahren nach einem der vorhergehenden Ansprüche, wobei mindestens eine der mindestens zwei Telematikvorrichtungen (21, 22, 23) Daten an das Kommunikationsnetzwerk (10) überträgt.

5. Verfahren nach Anspruch 4, wobei die an das Kommunikationsnetzwerk (10) übertragenen Daten paketbasierte Daten und Sprachdaten umfassen.

6. Verfahren nach einem der vorhergehenden Ansprüche, wobei eine der mindestens zwei Telematikvorrichtungen (21, 22, 23) ein Mobiltelefon (22) oder eine USB-UMTS-Vorrichtung (23) oder ein mobiler Computer (21) oder eine beliebige mobile Endbenutzerausrüstung, die den Anschluss an das drahtlose Kommunikationsnetzwerk (10) unterstützt, ist.

7. Verfahren nach einem der vorhergehenden Ansprüche, wobei die Verbindung der mindestens zwei Telematikvorrichtungen (21, 22, 23) mit dem Kommunikationsnetzwerk (10) durch ein virtuelles Verbundmodem (40) realisiert wird, das Teil eines Kommunikationssystems (30) ist, das in einem von Folgendem installiert ist:
a) einem Fahrzeug, insbesondere einem Automobil;
b) einem häuslichen oder geschäftlichen Umfeld, insbesondere in einer Hardware-Modemsteuerung oder in einer mobilen persönlichen Vorrichtung, insbesondere einem Laptop, oder einer stationären persönlichen Vorrichtung, insbesondere einem Personalcomputer.

8. Verfahren nach einem der vorhergehenden Ansprüche, die folgenden Schritte umfassend:
Übertragen von Sprachdaten durch eine erste Telematikvorrichtung von dem Kommunikationsnetzwerk (10);
Übertragen von paketbasierten Daten durch eine zweite Telematikvorrichtung von dem Kommunikationsnetzwerk (10); und
Ausführen einer Anwendung basierend sowohl auf den paketbasierten Daten als auch auf den Sprachdaten auf einer beliebigen der Telematikvorrichtungen oder einer beliebigen Vorrichtung innerhalb des Computersystems (30), bei der es sich um die Vorrichtung, die die virtuelle Verbundvorrichtung (40) ausführt, oder eine vollkommen andere persönliche Vorrichtung innerhalb des Computersystems (30) handeln kann.

9. Verfahren nach Anspruch 8, ferner umfassend das Wechseln der Verbindung der ersten oder zweiten Telematikvorrichtung von dem Kommunikationsnetzwerk (10) zu einer anderen Telematikvorrichtung aufgrund der Kopplung dieser zusätzlichen Vorrichtung mit dem Computersystem (30) und/oder aufgrund des Auftretens einer neuen Netzwerktechnologie des Anschlusses innerhalb des Bereichs des Computersystems (30), in dem die Telematikvorrichtungen ausführen.

10. Kommunikationssystem, umfassend
ein Computersystem (30), das zu Folgendem konfiguriert ist: Verbinden mit mindestens zwei Telematikvorrichtungen (21, 22, 23) ;
Verwalten der Verbindung der mindestens zwei Telematikvorrichtungen (21, 22, 23) mit einem Kommunikationsnetzwerk (10) zum Übertragen von paketbasierten Daten und Sprachdaten an das Kommunikationsnetzwerk (10) durch die mindestens zwei Telematikvorrichtungen (21, 22, 23) und/oder Empfangen von paketbasierten Daten und Sprachdaten von dem Kommunikationsnetzwerk (10) durch die mindestens zwei Telematikvorrichtungen (21, 22, 23);
Umsetzen eines virtuellen Verbundmodems (40), das die mindestens zwei Telematikvorrichtungen (21, 22, 23) steuert; und Ermöglichen einer Ausführung einer Telematikanwendung (50) durch eine der mindestens zwei Telematikvorrichtungen (21, 22, 23) basierend auf den Daten, die mit dem Kommunikationsnetzwerk (10) ausgetauscht werden, und einer Ausführung einer anderen Telematikanwendung (50) durch eine andere der mindestens zwei Telematikvorrichtungen (21, 22, 23) basierend auf den Daten, die mit dem Kommunikationsnetzwerk (10) ausgetauscht werden;
und wobei ein Computer, der das virtuelle Verbundmodem (40) ausführt, dazu konfiguriert ist, eine der Telematikvorrichtungen (21, 22, 23) zu steuern, um paketbasierte Daten mit dem Kommunikationsnetzwerk (10) auszutauschen, und eine andere der Telematikvorrichtungen (21, 22, 23), um Sprachdaten mit dem Kommunikationsnetzwerk (10) auszutauschen.

11. Kommunikationssystem nach Anspruch 10, wobei ein Computer, der das virtuelle Verbundmodem (40) ausführt, dazu konfiguriert ist, die Verbindung der mindestens einen der zwei Telematikvorrichtungen (21, 22, 23) basierend auf einer Signalqualität und Bandbreite der spezifischen Netzwerktechnologie des Anschlusses von dem Kommunikationsnetzwerk (10) zu wechseln oder die Verbindung zwischen beliebigen der Telematikvorrichtungen (21, 22, 23) und dem Kommunikationsnetzwerk basierend auf einer Überwachung der Verbindungsqualität zu wechseln.

12. Kommunikationssystem nach Anspruch 10 oder 11, wobei eine der mindestens zwei Telematikvorrichtungen (21, 22, 23) ein Mobiltelefon (22) oder ein mobiler Computer (21) oder eine beliebige mobile Benutzerausrüstung wie etwa ein USB-Stick (23) ist.

13. Kommunikationssystem nach einem der Ansprüche 10 bis 12, wobei der Computer, der das virtuelle Verbundmodem ausführt, dazu konfiguriert ist, Folgendes auszulösen:
Bedienen einer Anwendung basierend sowohl auf den paketbasierten Daten als auch auf den Sprachdaten, die auf einer beliebigen der Telematikvorrichtung (21, 22, 23) oder einem beliebigen anderen Computer innerhalb des Computersystems (30) oder auf dem Computer, der das virtuelle Verbundmodem selbst ausführt, ausgeführt werden kann.

## Revendications

1. Procédé mis en œuvre par ordinateur pour gérer le trafic de données, comprenant les étapes
de connexion d'au moins deux dispositifs télématiques (21, 22, 23) à un système informatique (30) ;
de gestion, par le système informatique (30), de la connexion des au moins deux dispositifs télématiques (21, 22, 23) à un réseau de communication (10) pour recevoir des données par paquets et des données vocales du réseau de communication (10) par les au moins deux dispositifs télématiques (21, 22, 23) ; et dans lequel
le système informatique (30) commande l'un des au moins deux dispositifs télématiques (21, 22, 23) pour recevoir les données par paquets du réseau de communication (10) afin d'exécuter une application télématique sur l'un des au moins deux dispositifs télématiques (21, 22, 23) et un autre des au moins deux dispositifs télématiques (21, 22, 23) pour recevoir les données vocales du réseau de communication (10) afin d'exécuter une autre application télématique sur l'autre des au moins deux dispositifs télématiques (21, 22, 23).

2. Procédé selon la revendication 1, dans lequel le système informatique (30) change la connexion d'au moins l'un des au moins deux dispositifs télématiques (21, 22, 23) au réseau de communication (10) à un autre des au moins deux dispositifs télématiques (21, 22, 23) au réseau de communication (30), en particulier au moyen d'un modem composite virtuel (40) qui est en particulier réalisé par le système informatique (30).

3. Procédé selon la revendication 2, dans lequel le changement de connexion est basé sur la qualité de signal et la bande passante de la technologie réseau spécifique de rattachement depuis le réseau de communication (10) par l'au moins un des au moins deux dispositifs télématiques (21, 22, 23).

4. Procédé selon l'une des revendications précédentes, dans lequel au moins l'un des au moins deux dispositifs télématiques (21, 22, 23) transmet des données au réseau de communication (10) .

5. Procédé selon la revendication 4, dans lequel les données transmises au réseau de communication (10) comprennent des données par paquets et des données vocales.

6. Procédé selon l'une des revendications précédentes, dans lequel l'un des au moins deux dispositifs télématiques (21, 22, 23) est un téléphone mobile (22), ou un dispositif USB-UMTS (23), ou un ordinateur mobile (21), ou tout équipement d'utilisateur final mobile prenant en charge le rattachement à un réseau de communication sans fil (10).

7. Procédé selon l'une des revendications précédentes, dans lequel la connexion des au moins deux dispositifs télématiques (21, 22, 23) au réseau de communication (10) est réalisée par un modem composite virtuel (40) faisant partie d'un système de communication (30) installé dans l'un ou les deux
a) d'un véhicule, en particulier, dans une automobile ;
b) d'un environnement domestique ou professionnel, en particulier, dans un dispositif de commande de modem matériel ou un appareil personnel mobile, en particulier, un ordinateur portable ou un appareil personnel fixe, en particulier un ordinateur personnel.

8. Procédé selon l'une des revendications précédentes, comprenant les étapes
de transmission de données vocales par un premier dispositif télématique à partir du réseau de communication (10) ;
de transmission de données par paquets par un second dispositif télématique à partir du réseau de communication (10) ; et d'exécution d'une application sur la base à la fois des données par paquets et des données vocales sur l'un quelconque des dispositifs télématiques ou sur tout dispositif à l'intérieur du système informatique (30) qui peut être le dispositif exécutant le dispositif composite virtuel (40) ou un dispositif personnel complètement différent à l'intérieur du système informatique (30).

9. Procédé selon la revendication 8, comprenant en outre la modification de la connexion du premier ou du second dispositif télématique du réseau de communication (10) à un autre dispositif télématique en raison du couplage de ce dispositif supplémentaire avec le système informatique (30) et/ou en raison de l'apparition d'une nouvelle technologie réseau de rattachement à l'intérieur de la plage du système informatique (30) où les dispositifs télématiques s'exécutent.

10. Système de communication, comprenant
un système informatique (30) configuré pour
une connexion à au moins deux dispositifs télématiques (21, 22, 23) ;
la gestion de la connexion des au moins deux dispositifs télématiques (21, 22, 23) à un réseau de communication (10) pour transmettre des données par paquets et des données vocales au réseau de communication (10) par les au moins deux dispositifs télématiques (21, 22 , 23) et/ou
la réception de données par paquets et de données vocales du réseau de communication (10) par les au moins deux dispositifs télématiques (21, 22, 23) ;
la mise en œuvre d'un modem composite virtuel (40) qui commande les au moins deux dispositifs télématiques (21, 22, 23) ; et le fait de permettre à l'un des au moins deux dispositifs télématiques (21, 22, 23) d'exécuter une application télématique (50) sur la base des données échangées avec le réseau de communication (10) et un autre des au moins deux dispositifs télématiques (21, 22, 23) pour exécuter une autre application télématique (50) sur la base des données échangées avec le réseau de communication (10) ;
et dans lequel un ordinateur exécutant le modem composite virtuel (40) est configuré pour commander l'un des dispositifs télématiques (21, 22, 23) pour échanger des données par paquets avec le réseau de communication (10) et un autre des dispositifs télématiques (21, 22, 23) pour échanger des données vocales avec le réseau de communication (10).

11. Système de communication selon la revendication 10, dans lequel un ordinateur exécutant le modem composite virtuel (40) est configuré pour modifier la connexion de l'au moins un des deux dispositifs télématiques (21, 22, 23) sur la base d'une qualité de signal et d'une bande passante de la technologie réseau spécifique de rattachement à partir du réseau de communication (10) ou modifier la connexion entre l'un quelconque des dispositifs télématiques (21, 22, 23) et le réseau de communication sur la base du contrôle de la qualité de connexion.

12. Système de communication selon la revendication 10 ou 11, dans lequel l'un des au moins deux dispositifs télématiques (21, 22, 23) est un téléphone mobile (22), ou un ordinateur mobile (21), ou tout équipement d'utilisateur mobile tel qu'une clé USB (23) .

13. Système de communication selon l'une des revendications 10 à 12, dans lequel l'ordinateur exécutant le modem composite virtuel est configuré pour invoquer
la desserte d'une application sur la base à la fois des données par paquets et des données vocales qui peuvent fonctionner sur l'un quelconque des dispositifs télématiques (21, 22, 23) ou sur tout autre ordinateur à l'intérieur du système informatique (30), ou sur l'ordinateur exécutant le modem composite virtuel lui-même.
